# EUROPEAN PATENT SPECIFICATION

(11) **EP 1 211 521 B1**
(45) Date of publication and mention of the grant of the patent: **07.12.2005**
(21) Application number: 00915516.9
(22) Date of filing: 13.04.2000
(51) Int. Cl.: G01T 1/20

(54) **SCINTILLATOR PANEL AND RADIATION IMAGE SENSOR**
SZINTILLATORPANEL UND STRAHLUNGSBILDSENSOR
PANNEAU SCINTILLATEUR ET CAPTEUR D'IMAGE RADIOLOGIQUE

(30) Priority: 16.04.1999 JP 10963599
(43) Date of publication of application: 05.06.2002
(73) Proprietor: HAMAMATSU PHOTONICS K.K., Hamamatsu-shi, Shizuoka-ken 435-8558 (JP)
(72) Inventor: HOMME, Takuya, Hamamatsu-shi, Shizuoka-ken 435-8558 (JP); TAKABAYASHI, Toshio, Hamamatsu-shi, Shizuoka-ken 435-8558 (JP)
(74) Representative: Rummler, Felix
(86) International application number: PCT/JP2000/002422
(87) International publication number: WO 2000/063722

(56) References cited:
- EP-A- 0 303 730
- EP-A- 0 903 590
- EP-A- 1 024 374
- WO-A1-98/36291
- JP-A- 1 191 087
- JP-A- 1 269 083
- JP-A- 5 060 871

## Description

### Technical Field

The present invention relates to a scintillator panel and radiation image sensor which are used for medical X-ray photography or the like.

### Background Art

While X-ray sensitive films have conventionally been used in medical and industrial X-ray photography, radiation imaging systems using radiation detectors have been coming into widespread use from the viewpoint of convenience and storability of photographed results. In such a radiation imaging system, pixel data caused by two-dimensional radiation are acquired as an electric signal by a radiation detector, and this signal is processed by a processing unit, so as to be displayed on a monitor.

Conventionally known as a typical radiation defector is one having a structure in which a scintillator panel comprising a scintillator formed on a substrate made of aluminum, glass, fused silica, or the like and an imaging device are cemented together. In this radiation detector, the radiation entering from the substrate side is converted by the scintillator into visible light, which is then detected by the imaging device (see JP7-21560A).

Meanwhile, though it is necessary for the scintillator panel to have a sufficiently high optical output in order to attain clear images in a radiation detector, the optical output has not been sufficient in the above-mentioned radiation detector.

EP-A-1024374 (published after the priority date of the present invention) and EP-A-0303730 describe scintillation devices comprising a substrate, a scintillator, a reflective film and a protective film.

It is an object of the present invention to provide a scintillator panel having an enhanced optical output, and a radiation image sensor using a scintillator panel having an enhanced optical output.

### Disclosure of the Invention

According to one aspect of the invention, there is provided a scintillator panel according to claim 1.

According to the scintillator panel of the present invention, since the entire surface of the reflective metal thin film is covered with the protective film, any decomposition of this thin film based on water contained in the scintillator in a small amount can be prevented, and any degradation in function of the reflective metal thin film as a reflecting film can be prevented. Hence, an increased optical output of the scintillator panel can be maintained.

In an embodiment, the scintillator is deposited on the protective film at a position except an edge portion thereof. Accordingly, since the scintillator and reflective metal thin film are separated, any decomposition of this film based on water contained in the scintillator in a small amount can be prevented, and any degradation in function of the reflective metal thin film as a reflecting film can be prevented. Hence, an increased optical output of the scintillator panel can be maintained.

The reflective metal thin film may substantially be made of a material containing a substance selected from the group consisting of Al, Ag, Cr, Cu, Ni, Ti, Mg, Rh, Pt, and Au.

The protective film may substantially be made of a material containing a substance selected for the group consisting of LiF, MgF₂, SiO₂, TiO₂, Al₂O₃, MgO, SiN, and polyimide.

The protective film may be an oxide film substantially made of a material containing a substance selected from the group consisting of Al, Ag, Cr, Cu, Ni, Ti, Mg, Rh, and Pt.

The protective film may comprise an inorganic film such as SiN and an organic film such as polyimide.

The scintillator is covered with an organic film. Thereby, the water-vapor resistance of the scintillator can be improved.

The organic film further covers at least part of a surface of the substrate. Thereby, the water-vapor resistance of the scintillator can be further improved as compared to a structure in which only the scintillator is covered with an organic film.

The organic film may further cover the entire free surface of the substrate. Thereby, the water-vapor resistance can be further improved as compared to a structure in which only the scintillator and at least part of the substrate surface are covered with an organic film.

According to another aspect of the invention, there is provided a radiation image sensor according to claim 12. According to the radiation image sensor of the present invention, since the scintillator panel can maintain an increased optical output, the output of the radiation image sensor can be maintained.

In an embodiment, the scintillator comprises a glass substrate, a reflecting film disposed on the substrate, a scintillator deposited on the reflecting film, and a transparent organic film covering the scintillator.

According to this embodiment, since the glass substrate is used, the substrate can have a certain rigidity even when its area is increased. For this reason, any deflection of the substrate in depositing a scintillator on the substrate can be suppressed, and the performance of the scintillator panel can be improved.

Preferably, the transparent organic film covers at least part of a surface of the substrate. Thereby, the water-vapor resistance can be further improved as compared to a structure in which only the scintillator is covered with an organic film.

The transparent organic film may further cover the entire free surface of the substrate. Thereby, the water-vapor resistance can be further improved as compared to a structure in which only the scintillator and at least part of the substrate surface are covered with an organic film.

In an embodiment of the radiation image sensor, the substrate of the scintillator panel is a glass substrate, whereby the performance of a radiation image sensor having a large area can be improved.

### Brief Description of the Drawings

Fig. 1 is a sectional view of a scintillator panel according to a first embodiment;
Fig. 2 is a sectional view of a radiation image sensor comprising a scintillator panel according to the first embodiment;
Fig. 3 is a sectional view of a scintillator panel according to a second embodiment;
Fig. 4 is a sectional view of a scintillator panel according to a modification not embodying the present invention;
Fig. 5 is a sectional view of a modification to the scintillator panel of Fig. 4;
Fig. 6 is a sectional view of a scintillator panel according to another modification not embodying the present invention;
Fig. 7 is a sectional view of a modification to the scintillator panel of Fig. 6;
Fig. 8 is a sectional view of a modification to the scintillator panel of the first embodiment;
Fig. 9 is a sectional view of a modification to the scintillator panel of the first embodiment;
Fig. 10 is a sectional view of a scintillator panel according to another modification not embodying the present invention;
Fig. 11 is a sectional view of a radiation image sensor according to another modification not embodying the present invention;
Fig. 12 is a sectional view of a scintillator panel according to another modification not embodying the present invention; and
Fig. 13 is a sectional view of a modification to the scintillator panel of Fig. 12.

### Best Modes for Carrying Out the Invention

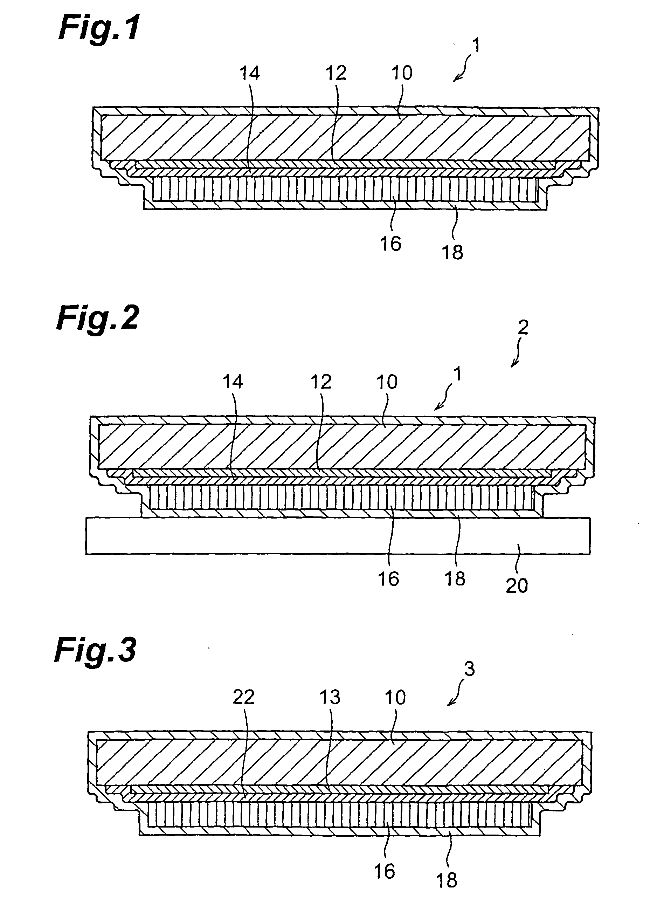

The first embodiment of the present invention will be described below with reference to Figs. 1 and 2. Fig. 1 is a sectional view of a scintillator panel 1, and Fig. 2 is a sectional view of a radiation image sensor 2.

As shown in Fig. 1, an Ag film 12 as a light-reflecting film (reflective metal thin film) is disposed on one surface of an amorphous carbon (a-C) (glassy carbon or glass-like carbon) substrate 10 of the scintillator panel 1. The surface of the Ag film 12 is covered with an SiN film 14 for protecting the Ag film 12. A scintillator 16 with a columnar structure, which converts incident radiation into visible light, is made on the surface of the SiN film 14. Tl-doped CsI is used as the scintillator 16. This scintillator 16 is covered with a polyparaxylylene film 18 together with the substrate 10.

The radiation image sensor 2 has a structure in which an image sensing element 20 is bonded to the distal end portion side of the scintillator 16 of the scintillator panel 1, as shown in Fig. 2.

The manufacturing process of the scintillator panel 1 will be described. First, an Ag film 12 as a light-reflecting film is formed to a thickness of 150 nm on one surface of a rectangular or circular a-C substrate 10 (thickness: 1 mm) by vacuum deposition. An SiN film 14 is formed to a thickness of 200 nm on the Ag film 12 by plasma CVD to cover the entire surface of the Ag film 12.

A columnar crystal of Tl-doped CsI is grown (deposited) on the surface of the SiN film 14 by deposition, thereby forming a scintillator 16 having a thickness of 250 µm. CsI that forms the scintillator 16 has high hygroscopicity, and if the scintillator is kept exposed, it absorbs vapor in air and deliquesces. To prevent this deliquescence, a polyparaxylylene film 18 is formed by CVD. That is, the substrate 10 with the scintillator 16 formed is placed in a CVD apparatus, and a polyparaxylylene film 18 is deposited to a thickness of 10 µm. With the above process, the polyparaxylylene film 18 is formed on the entire surfaces of the scintillator 16 and substrate 10 (the entire substrate surface that is exposed without any scintillator or the like).

The radiation image sensor 2 is manufactured by bonding the light-receiving portion of the image sensing element (CCD) 20 to the distal end portion side of the scintillator 16 of the completed scintillator panel 1 (Fig. 2).

According to the radiation image sensor 2 of this embodiment, radiation incident from the substrate 10 side is converted into light by the scintillator 16 and detected by the image sensing element 20. Since the scintillator panel 1 of the radiation image sensor 2 has the Ag film 12 as a reflective metal thin film, the light incident on the light-receiving portion of the image sensing element 20 can be increased, and a clear image can be detected by the radiation image sensor 2. In addition, since the Ag film 12 is wholly covered with the SiN film 14 that functions as a protective film for the Ag film 12, the function for a reflecting film of the Ag film 12 can be prevented from being damaged by decomposition due to corrosion or the like.

The second embodiment of the present invention will be described next. In the second embodiment to be described below, the same reference numerals as in the scintillator panel 1 and radiation image sensor 2 of the first embodiment denote the same components in the second embodiment.

Fig. 3 is a sectional view of a scintillator panel 3. As shown in Fig. 3, an Al film 13 serving as a reflecting film is formed on one surface of an a-C substrate 10 of the scintillator panel 3. The surface of the Al film 13 is covered with a polyimide film 22 for protecting the Al film 13. A scintillator 16 with a columnar structure, which converts incident radiation into visible light, is formed on the surface of the polyimide film 22. Tl-doped CsI is used as the scintillator 16. This scintillator 16 is covered with a polyparaxylylene film 18 together with the substrate 10.

A radiation image sensor is constructed by bonding an image sensing element to the distal end portion side of the scintillator 16 of the scintillator panel 3.

The manufacturing process of the scintillator panel 3 will be described. First, an Al film 13 as a light-reflecting film is formed to a thickness of 150 nm on one surface of a rectangular or circular a-C substrate 10 (thickness: 1 mm) by vacuum deposition. A polyimide film 22 is formed to a thickness of 1,000 nm on the Al film 13 by a spin coat process to cover the entire surface of the Al film 13.

A columnar crystal of Tl-doped CsI is grown on the surface of the polyimide film 22 by deposition, thereby forming a scintillator 16 having a thickness of 250 µm. CsI that forms the scintillator 16 has high hygroscopicity, and if the scintillator is kept exposed, it absorbs vapor in air and deliquesces. To prevent this deliquescence, the polyparaxylylene film 18 is formed by CVD. That is, the polyparaxylylene film 18 is formed on the entire surfaces of the scintillator 16 and substrate 10.

The radiation image sensor is manufactured by bonding the light-receiving portion of an image sensing element (CCD) 20 to the distal end portion side of the scintillator 16 of the completed scintillator panel 3.

According to the radiation image sensor using the scintillator panel 3 of this embodiment, radiation incident from the substrate 10 side is converted into light by the scintillator 16 and detected by the image sensing element 20. Since the scintillator panel 3 of the radiation image sensor has the Al film 13 as a reflective metal thin film, the light incident on the light-receiving portion of the image sensing element can be increased, and a clear image can be detected by the radiation image sensor. In addition, since the Al film 13 is wholly covered with the polyimide film 22 that functions as a protective film for the Al film 13, the Al film 13 as a reflecting film can be prevented from being damaged in function by a decomposition due to corrosion or the like.

A modification of the scintillator panel not embodying the present invention will be described next. In the modification to be described below, the same reference numerals as in the scintillator panel 1 and radiation image sensor 2 of the first embodiment denote the same components in the third embodiment.

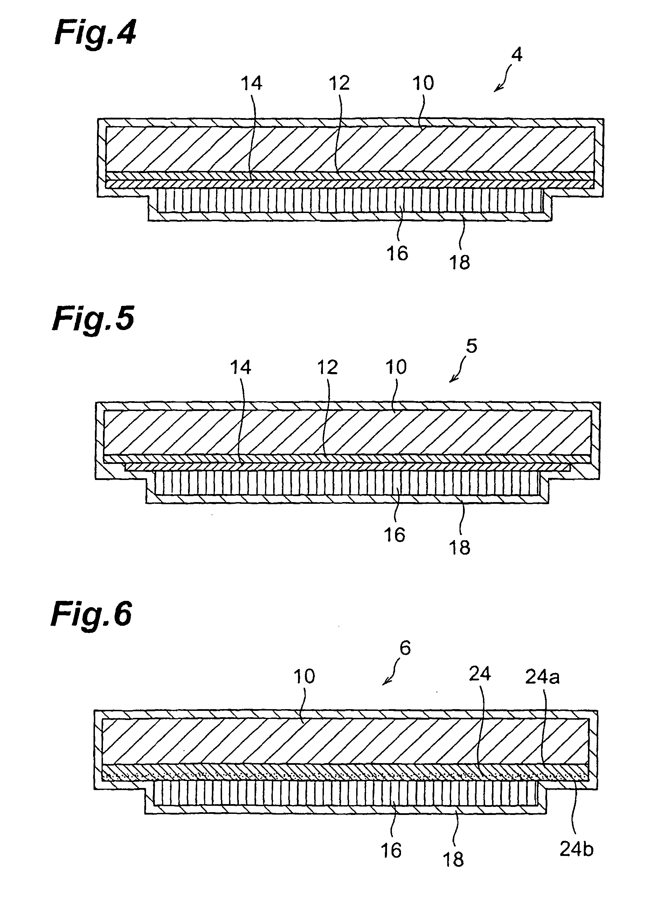

Fig. 4 is a sectional view of a scintillator panel 4. As shown in Fig. 4, an Ag film 12 as a light-reflecting film is formed on one surface of an a-C substrate 10 of the scintillator panel 4. An SiN film 14 for protecting the Ag film 12 is formed on the entire surface of the Ag film 12. A scintillator 16 with a columnar structure, which converts an incident radiation into visible light, is formed on the surface of the SiN film 14.

The scintillator 16 is formed at a position except the edge portion on the SiN film 14 so that the scintillator 16 located on the outer side is separated from the edge portion of the Ag film 12. Tl-doped CsI is used as the scintillator 16. This scintillator 16 is covered with a polyparaxylylene film 18 together with the substrate 10.

A radiation image sensor is constructed by bonding an image sensing element to the distal end portion side of the scintillator 16 of the scintillator panel 4.

According to the radiation image sensor using the scintillator panel 4 of this modification, radiation incident from the substrate 10 side is converted into light by the scintillator 16 and detected by an image sensing element 20. Since the scintillator panel 4 of the radiation image sensor has the Ag film 12 as a reflective metal thin film, the light incident on the light-receiving portion of the image sensing element 20 can be increased, and a clear image can be detected by the radiation image sensor. In addition, since the edge portion of the Ag film 12 is separated from the scintillator 16, the Ag film 12 as a reflecting film can be prevented from being damaged in function by a decomposition due to corrosion or the like.

In the scintillator panel 4 of this modification, the SiN film 14 is formed on the entire surface of the Ag film 12. However, as in a scintillator panel 5 shown in Fig. 5, the SiN film 14 may be formed at a position except the edge portion of the Ag film 12, and the scintillator 16 may be formed at a position except the edge portion of the SiN film 14. Even in this case, since the edge portion of the Ag film 12 is separated from the scintillator 16, the Ag film 12 as a reflecting film can be prevented from being damaged in function by a decomposition due to corrosion or the like.

Another modification not embodying the present invention will be described next. In the modification to be described below, the same reference numerals as in the scintillator panel 1 and radiation image sensor 2 of the first embodiment denote the same components in the fourth embodiment.

Fig. 6 is a sectional view of a scintillator panel 6. As shown in Fig. 6, an Al film 24 made of an Al film 24a and Al₂O₃ film (oxide film) 24b is formed on one surface of an a-C substrate 10 of the scintillator panel 6. A scintillator 16 with a columnar structure, which converts an incident radiation into visible light, is formed on the Al₂O₃ film 24b on the surface of the Al film 24. Tl-doped CsI is used as the scintillator 16. This scintillator 16 is covered with a polyparaxylylene film 18 together with the substrate 10.

A radiation image sensor is constructed by bonding an image sensing element to the distal end portion side of the scintillator 16 of the scintillator panel 6.

The manufacturing process of the scintillator panel 6 will be described. First, an Al film 24 as a light-reflecting film is formed to a thickness of 150 nm on one surface of a rectangular or circular a-C substrate 10 (thickness: 1 mm) by vacuum deposition. Subsequently, Al is evaporated while supplying oxygen gas, thereby forming an Al₂O₃ film 24b having a thickness of 30 nm on the entire surface of the Al film 24a.

A columnar crystal of Tl-doped CsI is grown on the surface of the Al₂O₃ film 24b by deposition, thereby forming a scintillator 16 having a thickness of 250 µm. CsI that forms the scintillator 16 has high hygroscopicity, and if the scintillator is kept exposed, it absorbs vapor in air and deliquesces. To prevent this deliquescence, a polyparaxylylene film 18 is formed by CVD. That is, the polyparaxylylene film 18 is formed on the entire surfaces of the scintillator 16 and substrate 10.

A radiation image sensor is constructed by bonding an image sensing element to the distal end portion side of the scintillator 16 of the scintillator panel 6.

According to the radiation image sensor using the scintillator panel 6 of this modification, radiation incident from the substrate 10 side is converted into light by the scintillator 16 and detected by an image sensing element 20. Since the scintillator panel 6 of the radiation image sensor has the Al film 24a as a reflective metal thin film, the light incident on the light-receiving portion of the image sensing element 20 can be increased, and a clear image can be detected by the radiation image sensor.

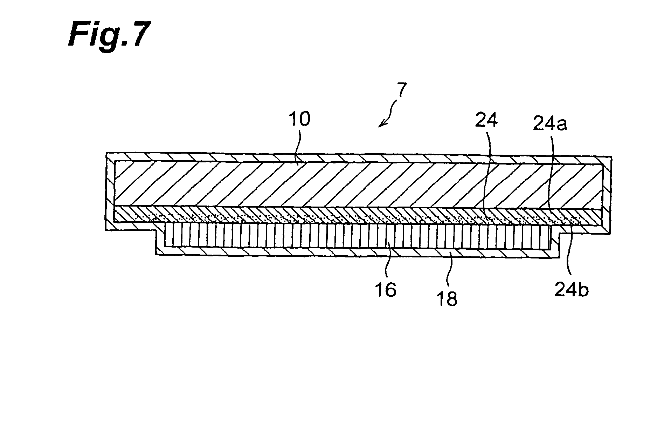

In addition, since the Al film 24a is wholly covered with the Al₂O₃ film 24b as a protective film for the Al film 24a, the Al film 24a as a reflecting film can be prevented from being damaged in function by a decomposition due to corrosion or the like. In addition, since the edge portion of the Ag film 12 is separated from the scintillator 16, the Ag film 12 as a reflecting film can be prevented from being damaged in function by a decomposition due to corrosion or the like. In the scintillator panel 6 of this modification, the Al₂O₃ film 24b is formed on the entire surface of the Al film 24a. However, as in a scintillator panel 7 shown in Fig. 7, the Al₂O₃ film 24b may be formed at a position except the edge portion of the Al film 24a. Even in this case, since the edge portion of the Al film 24 is separated from the scintillator 16, the Al film 24a as a reflecting film can be prevented from being damaged in function by a decomposition due to corrosion or the like.

In the above-described embodiments and modifications, an a-C substrate is used. However, since the substrate only need to pass radiation, a graphite substrate, Al substrate, Be substrate, or glass substrate may be used.

In the above-described embodiments and modifications, when an Al oxide film on the substrate is used as a protective film, a polyimide film as a protective film is also preferably formed on the oxide film. In this case, the Al film can be completely protected by the oxide film and polyimide film.

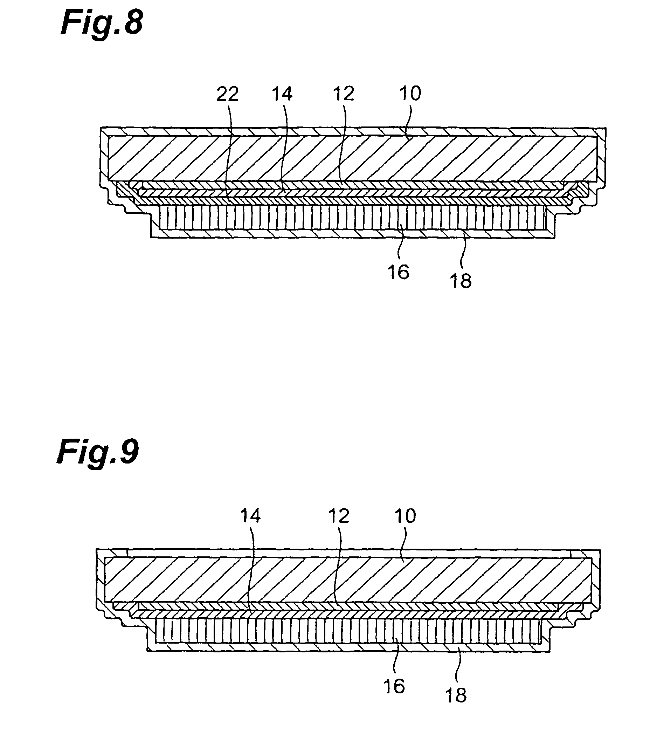

In the above-described embodiments and modifications, an SiN film or polyimide film is used as a protective film. Alternatively, a film made of a material containing a substance selected from the group consisting of transparent inorganic films such as LiF, MgF₂, SiO₂, Al₂O₃, TiO₂, MgO, and SiN and a transparent organic film such as polyimide may be used. Alternatively, a protective film formed from inorganic and organic films may be used, as shown in Fig. 8. That is, in a scintillator panel shown in Fig. 8, an Ag film 12 as a light-reflecting film is formed on one surface of an a-C substrate 10. The surface of the Ag film 12 is covered with the SiN film (inorganic film) 14 for protecting the Ag film 12, and the surface of the SiN film 14 is covered with a polyimide film (organic film) 22. A scintillator 16 having a columnar structure is formed on the surface of the polyimide film 22. The scintillator 16 is covered with a polyparaxylylene film 18 together with the substrate 10. When a protective film formed from inorganic and organic films is used, as in the scintillator panel shown in Fig. 8, the effect for protecting the light-reflecting film can be further improved.

In the above-described embodiments and modifications, an Ag film or Al film is used as a reflective metal thin film. However, a film made of a material containing a substance selected from the group consisting of Al, Ag, Cr, Cu, Ni, Ti, Mg, Rh, Pt, and Au may be used. In addition, two or more reflective metal thin films may be formed by forming, e.g., an Au film on a Cr film.

In the above-described embodiments and modifications, when a film made of a material containing a substance selected from the group consisting of Al, Ag, Cr, Cu, Ni, Ti, Mg, Rh, and Pt is used as a reflective metal thin film, an oxide film thereof can be used as a protective film.

In the above-described embodiments and modifications, the entire surfaces of the scintillator 16 and substrate (the surface with the scintillator formed and a surface on the opposite side, i.e., the radiation incident surface) are covered with the polyparaxylylene film 18, thereby making the scintillator completely resistant against water vapor. When the entire surface of the scintillator 16 and at least part of the surface of the substrate 10 are covered with the polyparaxylylene film 18, as shown in Fig. 9, the water-vapor resistance of the scintillator can be made higher than in a case wherein only the scintillator is covered.

Another modification not embodying the present invention will be described next. In the modification to be described below, the same reference numerals as in the scintillator panels 1 and 3 and the radiation image sensor 2 of the first and second embodiments denote the same components in this modification.

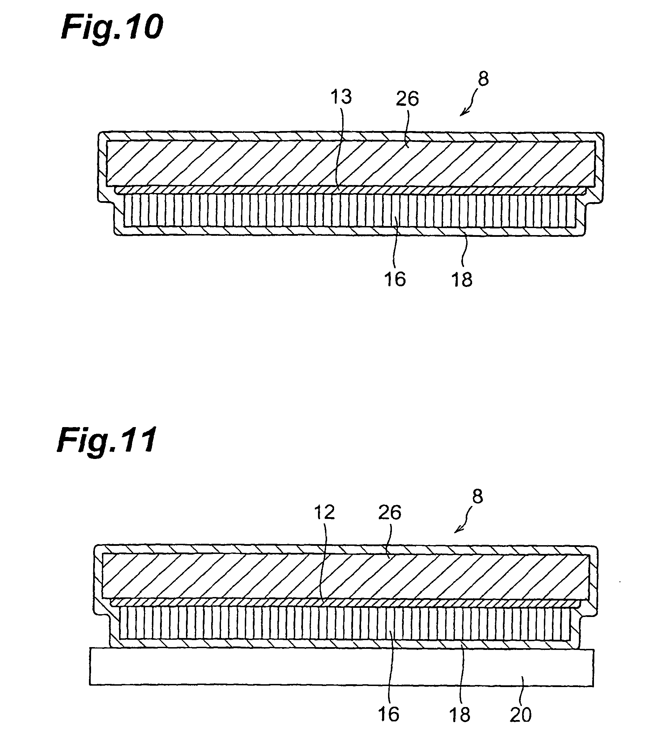

As shown in Fig. 10, a scintillator panel 8 has a glass substrate 26 having a flat shape. An Al film 13 as a reflecting film is formed to a thickness of 100 nm on one surface of the substrate by vacuum deposition. A 250-µm thick scintillator 16 with a columnar structure, which converts an incident radiation into visible light, is formed on the surface of the Al film 13. Tl-doped CsI grown by deposition is used for the scintillator 16.

The entire surface of the scintillator 16 is covered with a 10-µm thick polyparaxylylene film (transparent organic film) 18 formed by CVD, together with the substrate 26.

A radiation image sensor has a structure in which an image sensing element 20 is bonded to the distal end portion side of the scintillator 16 of the scintillator panel 8, as shown in Fig. 11.

According to the radiation image sensor of this modification, radiation incident from the substrate 26 side is converted into light by the scintillator 16 and detected by the image sensing element 20. Since the scintillator panel 8 of the radiation image sensor has the Al film 13 as a reflecting film, the light incident on the light-receiving portion of the image sensing element 20 can be increased, and a clear image can be detected by the radiation image sensor.

The substrate used for the scintillator panel 8 is preferably made thin to increase the radiation transmittance. When a glass substrate is used, a given rigidity can be ensured as compared to an Al substrate or a-C substrate even when the panel size is increased as in a scintillator panel used for a radiation image sensor for chest. For this reason, any deflection of the substrate can be prevented in forming a scintillator on the glass substrate. Hence, the scintillator can easily be formed on the substrate, and the quality of the formed scintillator can be maintained. As a type of glass to be used for the glass substrate of this embodiment, Pyrex glass is preferably used because of its cost and a small content of radiation absorbing component.

Another modification not embodying the present invention will be described next. In the modification to be described below, the same reference numerals as in the scintillator panel 5 and radiation image sensor of the previous modification denote the same components in this modification.

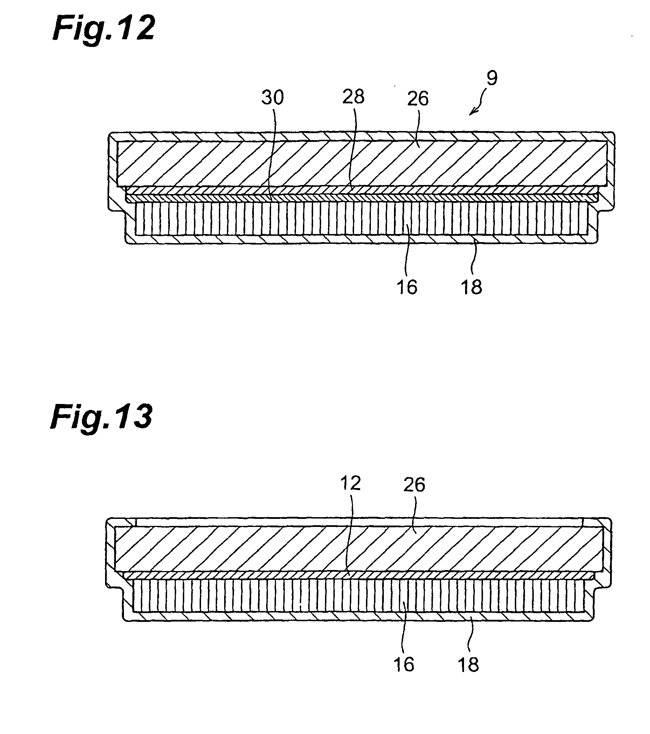

As shown in Fig. 12, a scintillator panel 9 has a glass substrate 26 having a flat shape. A Cr film 28 as a reflecting film is formed to a thickness of 100 nm on one surface of the substrate by vacuum deposition. An Au film 30 is formed on the surface of the Cr film 28, and a 250-µm thick scintillator 16 with a columnar structure is formed on the surface of the Au film 30. Tl-doped CsI grown by deposition is used as the scintillator 16.

The entire surface of the scintillator 16 is covered with a 10-µm thick polyparaxylylene film (transparent organic film) 18 formed by CVD, together with the substrate 26. A radiation image sensor has a structure in which an image sensing element 20 is bonded to the distal end portion side of the scintillator 16 of the scintillator panel 9.

Since the reflecting film of the scintillator panel is formed from the Cr film 28 with good adhesion to the glass substrate and the Au film 30 with good bonding to Cr, the reflecting film can have high stability.

In the above-described embodiments and modifications, a film made of a material containing a substance selected from the group consisting of Al, Ag, Cr, Cu, Ni, Ti, Mg, Rh, Pt, and Au may be used as a reflective metal thin film.

In the above-described embodiments and modifications, CsI (Tl) is used as the scintillator 16. Alternatively, CsI (Na), NaI (Tl), LiI (Eu), KI (Tl), or the like may be used.

In the above-described embodiments and modifications, the entire surfaces of the scintillator 16 and substrate (the surface with the scintillator formed and a surface on the opposite side, i.e., the radiation incident surface) are covered with the polyparaxylylene film 18, thereby making the scintillator completely resistant against water vapor. When the scintillator 16 and at least part of the surface of the substrate are covered with the polyparaxylylene film 18, as shown in Fig. 13, the water-vapor resistance of the scintillator can be made higher than in a case wherein only the scintillator is covered.

Polyparaxylylene in the above-described embodiments and modifications includes, in addition to polyparaxylylene, polymonochloro-paraxylylene, polydichloro-paraxylylene, polytetrachloro-paraxylylene, polyfluoro-paraxylylene, polydimethyl-paraxylylene, polydiethyl-paraxylylene, and the like.

According to the scintillator panel of the above embodiments and modifications, any change in properties of the reflective metal thin film based on water contained in the scintillator in a small amount can be prevented, and the function of the reflective metal thin film as a reflecting film can be prevented from degrading. Hence, an increased optical output of the scintillator panel can be maintained. When a glass substrate is used, even a scintillator panel having a large area can keep its performance high.

In addition, according to the radiation image sensor of the above embodiments and modifications, since the scintillator panel can maintain an increased optical output, the output of the radiation image sensor can be maintained.
When a glass substrate is used, even a radiation image sensor having a large area can keep its performance high.

### Industrial Applicability

As described above, the scintillator panel and radiation image sensor of the present invention are suitable for medical X-ray imaging or the like.

## Claims

1. A scintillator panel (1,3) comprising:
a radiation-transmitting substrate (10);
a reflective metal thin film (12,13) disposed on a surface of said substrate (10);
a protective film (14, 22) on said reflective metal thin film (12, 13);
a scintillator (16) deposited on said protective film (14, 22); and
an organic film (18) covering said scintillator (16) and at least part of a surface of said substrate (10),
wherein said protective film (14, 22) is provided to protect said reflective metal thin film (12, 13) against said scintillator (16) and extends over the edges of the reflective metal thin film (12, 13) and contacts said surface of said substrate (10).

2. A scintillator panel (1, 3) according to claim 1, wherein said scintillator (16) covers said protective film (14,22) except an edge portion thereof, and said reflective metal thin film (12, 13) is provided to transmit radiation and reflect light irradiated from said scintillator (16).

3. A scintillator panel (1, 3) according to claim 1 or 2, wherein said reflective metal thin film (12, 13) is directly disposed on said substrate (10).

4. A scintillator panel (1, 3) according to any one of claims 1 to 3, wherein said reflective metal thin film (12, 13) is substantially made of a material containing a substance selected from the group consisting of Al, Ag, Cr, Cu, Ni, Ti, Mg, Rh, Pt, and Au.

5. A scintillator panel (1, 3) according to any one of claims 1 to 4, wherein said protective film (14, 22) is an inorganic film.

6. A scintillator panel (1, 3) according to claim 5, wherein said protective film (14, 22) is substantially made of a material containing a substance selected from the group consisting of LiF, MgF₂, SiO₂, TiO₂, Al₂O₃, MgO and SiN.

7. A scintillator panel (1, 3) according to claim 5, wherein said protective film (14, 22) is a metal oxide film.

8. A scintillator panel (1, 3) according to claim 7, wherein said protective film (14, 22) is an oxidized material of said reflective metal thin film (12, 13).

9. A scintillator panel (1, 3) according to any one of claims 1 to 4, wherein said protective film (14, 22) is an organic film.

10. A scintillator panel (1, 3) according to claim 9, wherein said protective film (14, 22) is substantially made of polyimide.

11. A scintillator panel (1, 3) according to any preceding claim, wherein said organic film (18) further covers the entire free surface of said substrate (10).

12. A radiation image sensor (2) wherein an image-sensing element (20) is arranged to face the scintillator (16) of a scintillator panel (1) according to any one of claims 1 to 11.

## Patentansprüche

1. Szintillatorplatte (1, 3), die Folgendes umfasst:
ein strahlungsdurchlässiges Substrat (10),
einen reflektierenden Metall -Dünnfilm (12, 13), der auf einer Oberfläche des Substrats (10) angeordnet ist,
einen Schutzfilm (14, 22) auf dem reflektierenden Metall-Dünnfilm (12, 13),
einem Szintillator (16) auf dem Schutzfilm (14, 22), und
einen organischen Film (18), der den Szintillator (16) und zumindest einen Teil einer Oberfläche des Substrats (10) bedeckt,
wobei der Schutzfilm (14, 22) dem Schutz des reflektierenden Metall-Dünnfilms (12, 13) dem Szintil lator (16) gegenüber dient und sich über die Ränder des reflektierenden Metall-Dünnfilms (12, 13) er streckt und die Oberfläche des Substrats (10) berührt.

2. Szintillatorplatte (1, 3) nach Anspruch 1, bei der der Szintillator (16) den Schutzfilm (14, 22) abgesehen von einem Randabschnitt davon bedeckt und der reflektierende Metall-Dünnfilm (12, 13) Strahlung durchlässt und vom Szintillator (16) ausgestrahltes Licht reflektiert.

3. Szintillatorplatte (1, 3) nach Anspruch 1 oder 2, bei der der reflektierende Metall-Dünnfilm (12, 13) direkt auf dem Substrat (10) angeordnet ist.

4. Szintillatorplatte (1, 3) nach einem der Ansprüche 1 bis 3, bei der der reflektierende Metall-Dünnfilm (12, 13) im Wesentlichen aus einem Material besteht, das eine aus der aus Al, Ag, Cr, Cu, Ni, Ti, Mg, Rh, Pt und Au bestehenden Gruppe ausgewählte Substanz enthält.

5. Szintillatorplatte (1, 3) nach einem der Ansprüche 1 bis 4, bei der es sich bei dem Schutzfilm (14, 22) um einen anorganischen Film handelt.

6. Szintillatorplatte (1, 3) nach Anspruch 5, bei der der Schutzfilm (14, 22) im Wesentlichen aus einem Material besteht, das eine aus der aus LiF, MgF₂, SiO₂, TiO₂, Al₂O₃, MgO und SiN bestehenden Gruppe ausgewählte Substanz enthält.

7. Szintillatorplatte (1, 3) nach Anspruch 5, bei der es sich bei dem Schutzfilm (14, 22) um einen Metall oxidfilm handelt.

8. Szintillatorplatte (1, 3) nach Anspruch 7, bei der es sich bei dem Schutzfilm (14, 22) um ein oxidiertes Material des reflektierenden Metall-Dünnfilms (12, 13) handelt.

9. Szintillatorplatte (1, 3) nach einem der Ansprüche 1 bis 4, bei der es sich bei dem Schutzfilm (14, 22) um einen organischen Film handelt.

10. Szintillatorplatte (1, 3) nach Anspruch 9, bei der der Schutzfilm (14, 22) im Wesentlichen aus Polyimid be steht.

11. Szintillatorplatte (1, 3) nach einem der vorhergehenden Ansprüche, bei der der organische Film (18) ferner die gesamte freie Oberfläche des Substrats (10) bedeckt.

12. Strahlungsbildsensor (2), bei dem ein Bilderfassungselement (20) so angeordnet ist, dass es dem Szin tillator (16) einer Szintillatorplatte (1) nach einem der Ansprüche 1 bis 11 zugewandt ist.

## Revendications

1. Panneau scintillateur (1, 3) comprenant :
un substrat (10) émettant un rayonnement ;
un film fin métallique réfléchissant (12, 13) placé sur une surface dudit substrat (10) ;
un film protecteur (14, 22) sur ledit film fin métallique réfléchissant (12, 13) ;
un scintillateur (16) placé sur ledit film protecteur (14, 22) ; et
un film organique (18) recouvrant ledit scintillateur (16) et au moins une partie de la surface dudit substrat (10),
dans lequel ledit film protecteur (14, 22) est prévu pour protéger ledit film fin métallique réfléchissant (12, 13) contre ledit scintillateur (16) et s'étend sur les bords du film fin métallique réfléchissant (12, 13) et touche ladite surface dudit substrat (10).

2. Panneau scintillateur (1, 3) selon la revendication 1, dans lequel ledit scintillateur (16) recouvre ledit film protecteur (14, 22) excepté une partie de son bord, et ledit film fin métallique réfléchissant (12, 13) est prévu pour transmettre le rayonnement et réfléchir la lumière irradiée à partir du scintillateur (16).

3. Panneau scintillateur (1, 3) selon la revendication 1 ou 2, dans lequel ledit film fin métallique réfléchissant (12, 13) est directement placé sur ledit substrat (10).

4. Panneau scintillateur (1,3) selon l'une quelconque des revendications 1 à 3, dans lequel ledit film fin métallique réfléchissant (12, 13) est essentiellement fait d'un matériau contenant une substance choisie dans le groupe comprenant Al, Ag, Cr, Cu, Ni, Ti, Mg, Rh, Pt, et Au.

5. Panneau scintillateur (1, 3) selon l'une quelconque des revendications 1 à 4, dans lequel ledit film protecteur (14, 22) est un film inorganique.

6. Panneau scintillateur (1, 3) selon la revendication 5, dans lequel ledit film protecteur (14, 22) est essentiellement fait d'un matériau contenant une substance choisie dans le groupe comprenant LiF, MgF₂, SiO₂, TiO₂, Al₂O₃, MgO et SiN.

7. Panneau scintillateur (1, 3) selon la revendication 5, dans lequel ledit film protecteur (14, 22) est un film d'oxyde métallique.

8. Panneau scintillateur (1, 3) selon la revendication 7, dans lequel ledit film protecteur (14, 22) est un matériau oxydé dudit film fin métallique réfléchissant (12, 13).

9. Panneau scintillateur (1, 3) selon l'une quelconque des revendications 1 à 4, dans lequel ledit film protecteur (14, 22) est un film organique.

10. Panneau scintillateur (1, 3) la revendication 9, dans lequel ledit film protecteur (14, 22) est essentiellement fait de polyimide.

11. Panneau scintillateur (1, 3) selon l'une quelconque des revendications précédentes, dans lequel ledit film organique (18) recouvre en outre la surface entière libre dudit substrat (10).

12. Capteur d'image radiologique (2) dans lequel un élément de détection d'images (20) est placé en face du scintillateur (16) d'un panneau scintillateur (1) selon l'une quelconque des revendications 1 à 11.
